**Europäisches Patentamt**

**European Patent Office**

**Office européen des brevets**

(19)

(11) Veröffentlichungsnummer: **0 070 396**
**A1**

# (12) EUROPÄISCHE PATENTANMELDUNG

(21) Anmeldenummer: **82105389.9**

(22) Anmeldetag: **19.06.82**

(51) Int. Cl.³: **A 01 B 35/18,** A 01 B 49/02,
A 01 B 13/08

(30) Priorität: **21.07.81 DE 3128709**

(43) Veröffentlichungstag der Anmeldung: **26.01.83**
**Patentblatt 83/4**

(84) Benannte Vertragsstaaten: **AT BE CH FR GB IT LI NL SE**

(71) Anmelder: **Weichel, Ernst, Bahnhofstrasse 1,
D-7326 Heiningen (DE)**

(72) Erfinder: **Weichel, Ernst, Bahnhofstrasse 1,
D-7326 Heiningen (DE)**

(54) **Schichtengrubber mit den Arbeitswerkzeugen zugeordneter Anpresswalze.**

(57) Zur Vermeidung von Schollenbildung an der Bodenoberfläche beim Einsatz von Schichtengrubbern zum Tiefenlockern von Rasenflächen od.dgl. ist eine den Lockerungswerkzeugen (6) an der Bodenoberfläche zugeordnete Andrückwalze vorgesehen.

Diese Walze besteht dabei aus einzelnen Abschnitten (7a bis 7f), die von der Geräterückseite her in die jeweiligen Zwischenräume (b und c) zwischen den Haltestielen (5) und/ oder die unteren Dreipunktkonsolen (3) des Rahmenrohres (1) hineinragen und somit das schollenartige Aufbrechen der Bodenoberfläche verhindern.

Die Abschnitte (7a bis 7f) können dabei einzeln oder in Gruppen zusammengefaßt am Geräterahmen (1) angelenkt sein. Neben freiem Abrollen auf dem Boden ist auch die Zuordnung eines Zwangsantriebs vom Boden aus oder über ein Getriebe mit Zapfwellenanschluß vorgesehen.

ACTORUM AG

**EP 0 070 396 A1**

0070396

ERNST   W E L C H E L          D 7326 HEININGEN, 15.06.1982
                              Bahnhofstraße 1

Schichtengrubber mit den Arbeitswerkzeugen

zugeordneter Anpreßwalze

---

Die Erfindung bezieht sich auf einen Schichtengrubber nach dem Oberbegriff des Hauptanspruchs.

Derartige Geräte haben sich seit einigen Jahren in der Landwirtschaft zum Tieflockern verfestigter Ackerböden bestens bewährt und bedürfen von ihrem baulichen Grundprinzip her inzwischen keiner generellen Änderung oder Verbesserung mehr.

Da bei bestimmten Bearbeitungsvorgängen, beispielsweise dem Unterfahren von Wiesen o.ä. Grünflächen, jedoch neben dem Lockern der unteren Bodenschichten bedingt durch die Pfeilform und den Anstellwinkel der flügelförmigen Lockerungsschare im Oberflächenbereich auch eine Art Schollenbildung oder Umbruch

0070396

auftreten kann, die z.B. das spätere Mähen erschweren oder unmöglich machen würde, ist es eine Aufgabe der vorliegenden Erfindung, geeignete Maßnahmen an Geräten der eingangs erwähnten Art vorzusehen, mit denen dieser unerwünschte Nebeneffekt vermieden bzw. wieder ausgeglichen werden kann.

Weitere, durch die vorliegende Erfindung zu lösende Aufgaben bestehen darin, den Zugkraftbedarf der gesamten Gerätekombination zu senken, das Auftreten von Verstopfungen an den Haltestielen der Lockerungswerkzeuge, z.B. durch große Mengen insbesondere langhalmigem Getreide- oder Körnermaisstroh u. dgl. zu verhindern, und die genaue Einhaltung auch sehr geringer Arbeitstiefen nachfolgender Geräte zur Saatbettherrichtung auch auf im selben Arbeitsgang verhältnismäßig tief gelockerten Böden zu ermöglichen.

Gelöst wird diese mit der vorliegenden Erfindung gestellte Aufgabe im wesentlichen durch eine zusätzlich am Geräterahmen angelenkte, sich über die gesamte Arbeitsbreite der Lockerungsschare erstreckende, frei oder zwangsweise drehbare und zumindest mit einem Teil ihres Umfangs in vertikaler Projektion oberhalb der Lockerungsschare verlaufende Andrückwalze.

Bedingt dadurch , daß diese Andrückwalze aus einzelnen, über eine gemeinsame Achse miteinander verbundenen und mit gegenseitigen Axialabstand zueinander liegenden Teilabschnitten besteht und letztere von der Geräterückseite her in die jeweiligen Zwischenräume zwischen den Haltestielen und/oder die unteren Dreipunktkonsolen hineinragen, und zudem eine Art horizontaler und vertikaler Verstellmöglichkeit der Walze vorgesehen ist, liegt es auf der Hand, daß durch diese Mittel und Maßnahmen eine Walzeneinstellung relativ zu den Lockerungskörpern getroffen werden kann, bei der ein eventuelles Aufbrechen der zu bearbeitenden Bodenoberfläche durch die einzelnen Walzenabschnitte bereits begrenzt werden kann, bevor ein schollenartiges Umkippen o. dgl. der oberen Bodenschicht auftritt.

Weitere Einzelheiten in baulicher und funktionsfördernder Hinsicht sind den restlichen Unteransprüchen sowie der Zeichnung und Zeichnungsbeschreibung zu entnehmen. Hierbei zeigen:

Fig. 1  die Rückansicht eines erfindungsgemäßen Arbeitsgerätes in weitestgehend schematischer Darstellung,

- 4 -

Fig. 2    eine Seitenansicht zu Fig. 1 in vergröß--ertem Maßstab und gemäß der Schnittlinie AB und

Fig. 3    die Befestigung der Haltestiele als
Einzelheit und gemäß Schnittverlauf
CD in Fig. 1.

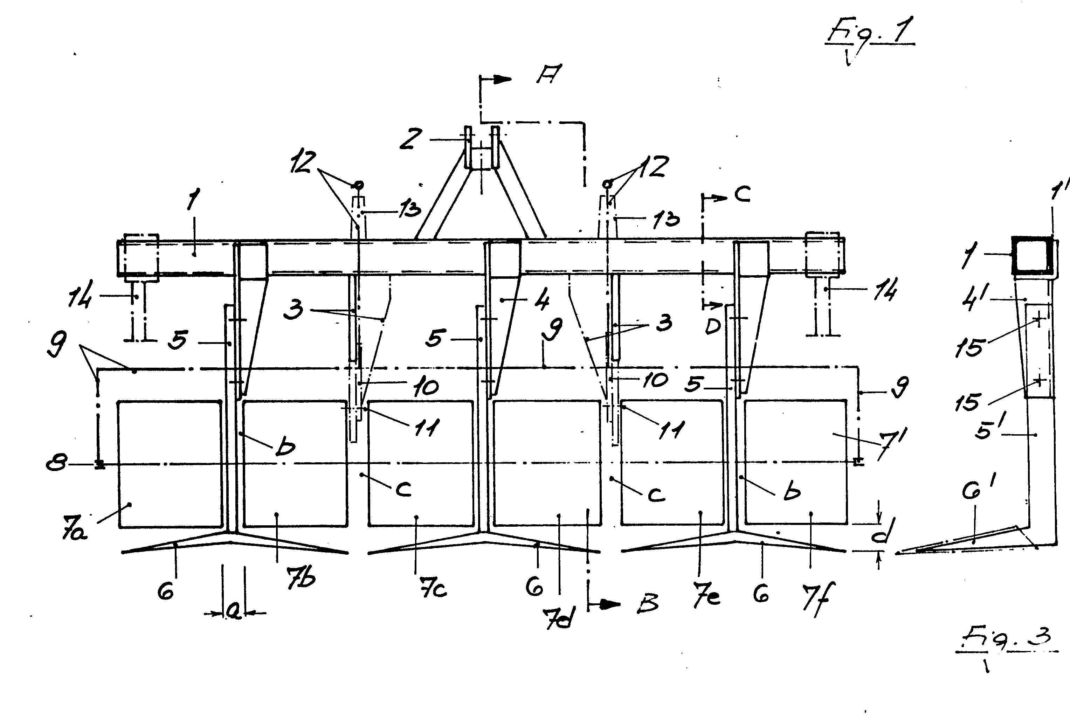

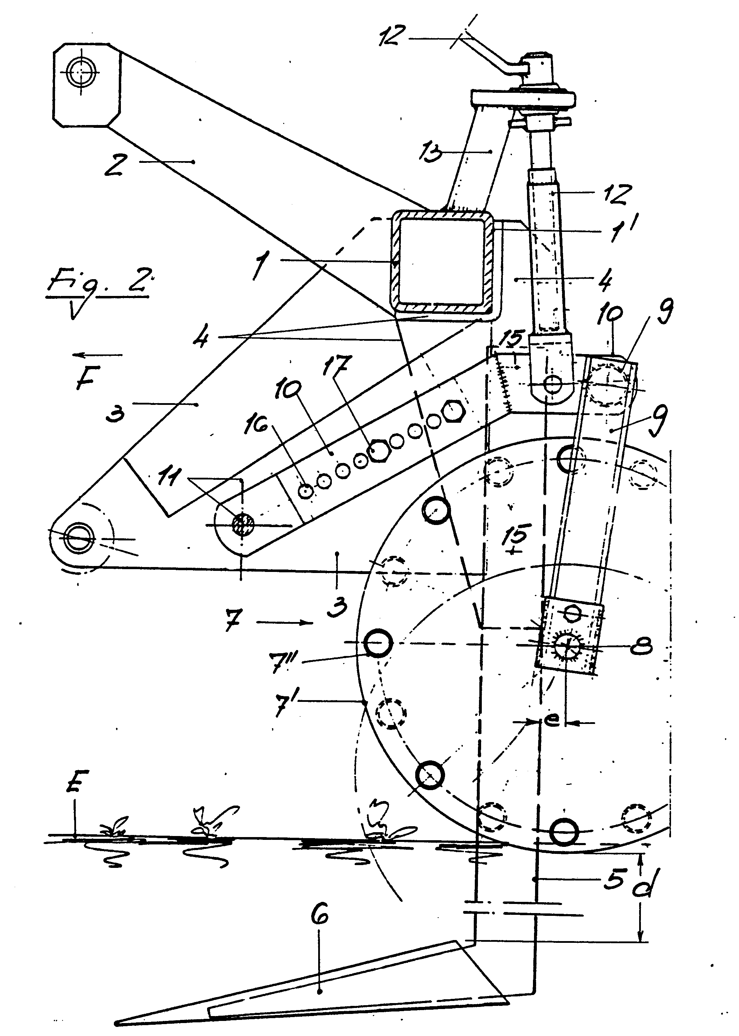

Der in Fig. 1 und 2 dargestellte Schichtengrubber besteht
in seinem bekannten Grundaufbau aus einem quer zur Arbeitsrichtung liegenden Rahmenrohr 1 mit vorn liegendem
Dreipunktbock 2, 3 und fest am Rahmen 1 angeschlossenen
Halterungen 4 für die Stiele 5 der Lockerungsschare 6.

Oberhalb dieser Lockerungsschare 6 ist nun eine Andrückwalze 7 angeordnet, deren Außenmantel 7' als geschlossene
Fläche (Fig. 1) oder als Käfig durch Stäbe 7'' (Fig. 2)
gebildet sein kann. Damit diese Walze 7, 7' bzw. 7, 7''
nunmehr auch in eine günstige Position oberhalb der
Lockerungsschare 6 gebracht werden kann, besteht sie aus
mehreren, über eine gemeinsame Achse 8 miteinander verbundenen Teilabschnitten 7a bis 7f, die mit gegenseitigem Horizontalabstand (a) zueinander liegen und von der
Rahmenrückseite 1' her in die jeweiligen Zwischenräume
(b bzw. c) zwischen den Haltestiele 5 und/oder letzteren
zu den unteren Dreipunktkonsolen 3 hineinragen. An diesen

- 5 -

Konsolen 3 ist zudem über Hebelrame 10 das die Walze 7 tragende, bügelförmige Joch 9 in Drehpunkten 11 derart beweglich angelenkt, daß die Walze mittels der an Rahmenhalterungen 13 befestigten Spindeln 12 in ihrem Höhenabstand d zu den Lockerungsscharen 6 verändert und damit den jeweiligen Erfordernissen angepaßt werden kann. Strichpunktiert angedeutet an den jeweiligen Enden des Rahmenrohres 1 sind zudem noch Halterungen 14 für hier nicht dargestellte übliche Stütz- bzw. Nachlaufräder.

In der Schnittdarstellung nach Fig. 3 ist schließlich noch angedeutet, daß die Halterungen 4' für die Stiele 5' der Lockerungsschare 6' derart am Rahmen 1 angebracht sein können, daß neben dem bereits bekannten Anschluß der Stiele 5' vor oder hinter dem Rahmenrohr 1 auch ein Anschluß unmittelbar unterhalb des letzteren möglich ist; durch entsprechende Anordnung von Bohrungen 15 können dabei die Stiele 5, 5' ebenso in der Höhe verstellbar, d.h. in unterschiedlichen Höhenlagen anschraubbar sein, wie eine Längsverstellung der Walze 7 in Fahrtrichtung F möglich ist über die Schrauben und Bohrungen 16, 17 in den Hebelarmen 10.

- 6 -

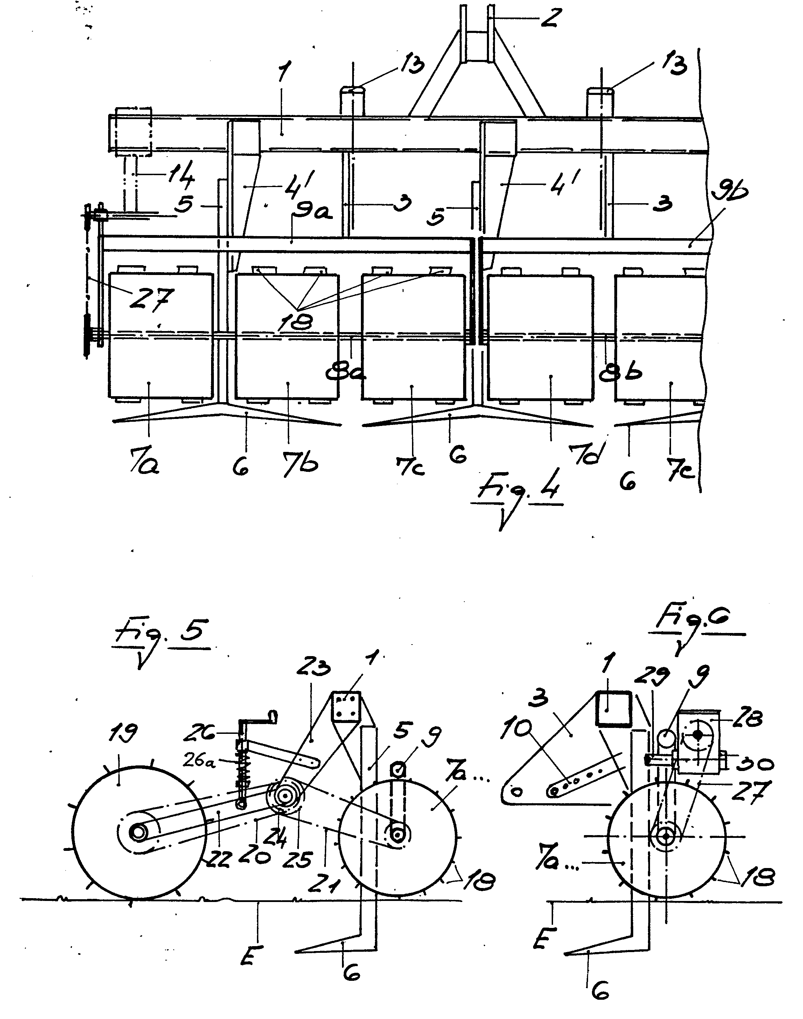

Gemäß der zeichnerischen Darstellung in Fig. 4 kann in alternativer Form auch eine gruppenweise Zusammenfassung mehrerer Walzenabschnitte 7a bis 7c und 7d bis 7f vorgesehen werden. Diese Gruppen werden dann ebenfalls über Bügelteile 9a bzw . 9b, die an den Achsabschnitten 8a bzw. 8b angreifen, in zu den Fig. 1 und 2 äquivalenter Weise am Geräterahmen separat verstellbar angelenkt; diese Ausführung kann bei Bearbeitung unterschiedlicher Feldstreifen ebenso von Vorteil sein, wie die Ausgestaltung der profilierten Walzenoberfläche mit stegartigen Mitnahmeelementen 18.

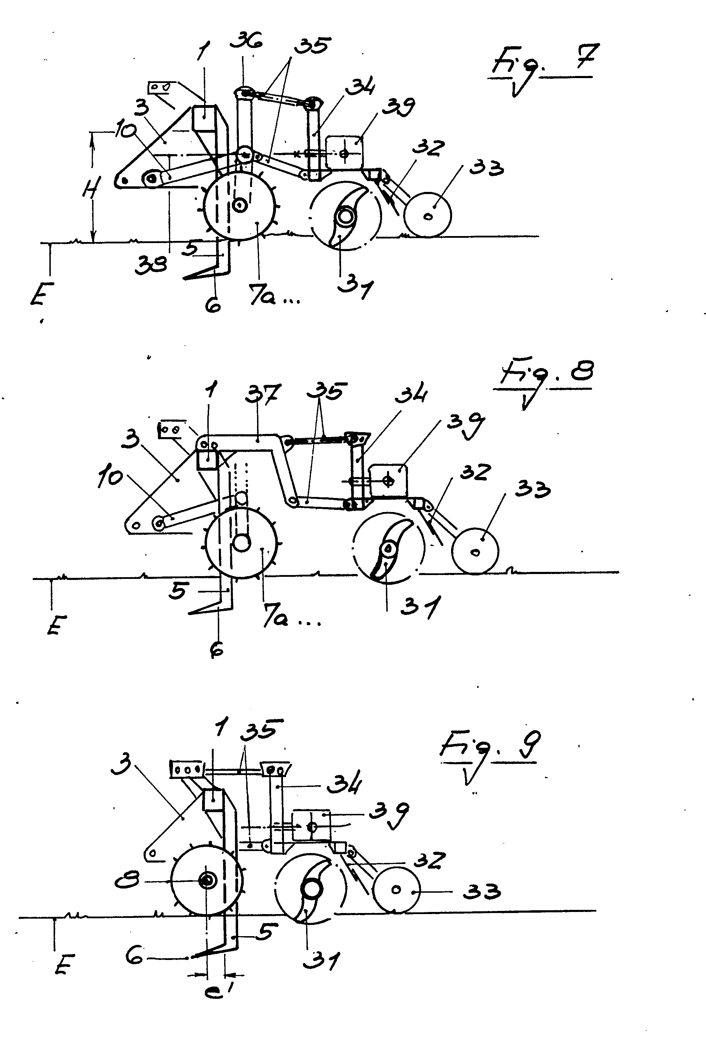

In weiterer Ausgestaltung der vorliegenden Erfindung ist es ebenso denkbar, die Andrückwalzenabschnitte 7a bis 7f fest auf der Achse 8 bzw. den Achsabschnitten 8a und 8b anzuordnen und diese über ein von einem beispielsweise seitlich zum Schlepper laufenden, an sich bekannten Bodenantriebsrad 19 gemäß Fig. 5 zwangsweise über die Antriebselemente 20, 21 anzutreiben. Das Bodenantriebsrad 19 ist hierbei vorteilhafterweise mittels einer Schwinge 22 an einem vom Geräterahmen 1 ausgehenden Ausleger 23 gelagert, wobei letzterer auch die Zwischenräder 24, 25 für die Antriebsketten 20, 21 trägt.

Über eine Stellspindel 26 und eine Druckfeder 26a läßt sich dabei der Anpreßdruck des Rades 19 einstellen.

Alternativ hierzu zeigt Fig. 6 schließlich eine Lösung, bei der der Zwangsantrieb 27 über ein Getriebe 28 erfolgt, das einen Anschlußzapfen 29 für eine nicht dargestellte Schlepperzapfwelle zeigt. Dieser Zwangsantrieb ist besonders auf schweren, trockenen oder mit langhalmigem Stroh u. dergl. bedeckten Böden vorteilhaft, weil er einen beachtlichen Zugkraftgewinn und ein absolut verstopfungsfreies Arbeiten ermöglicht.
Ein weiterer Anschlußzapfen 30 für eventuell angehängte Nachfolgegeräte kann ebenfalls am Getriebe 28 noch vorgesehen werden.

Eine Möglichkeit der Anhängung solcher Nachfolgegeräte zeigt Fig. 7 bis 9, wobei hierin eine Rotoregge 31 dargestellt ist mit nachgeordnetem Streichblech 32 und Krümelwalze 33. Der Anbaurahmen 34 der Rotoregge 31 ist dabei entweder über Arme 35 o. dgl. verstellbar am Gestell 36 der Walze 7a bis 7f angelenkt (Fig. 7) oder mittels einer gesonderten Zwischenbrücke 32 unmittelbar am Querträger 1 des

- 8 -

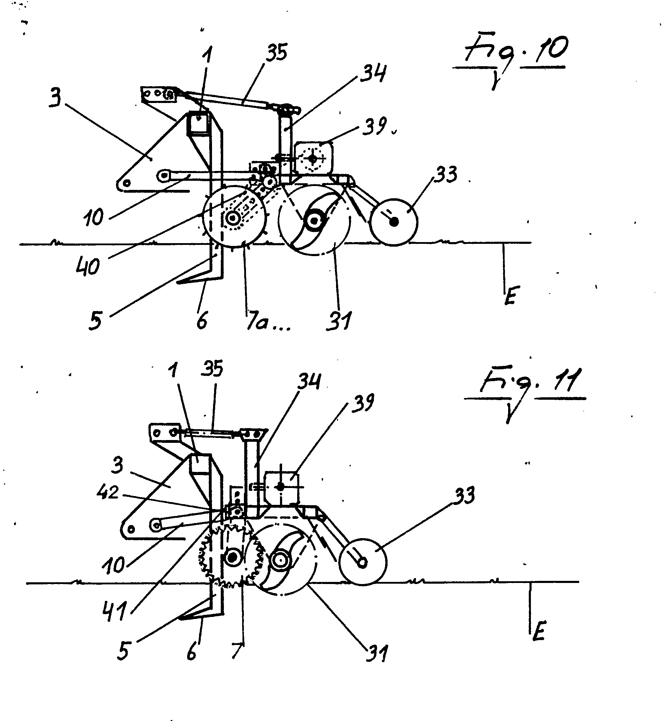

Grundgerätes 1 bis 6 (Fig. 8) oder aber in nicht näher
angedeuteter, anderer bekannter Weise.

In Fig. 9 ist letztlich noch angedeutet, daß die
Andrückwalze 7a bis 7f auch um ein bestimmtes Maß
e' vor den Stielen 5 der Lockerungsschare 6 liegen
kann, anstelle hinter denselben, wenn gewisse
Bodenverhältnisse das erfordern sollten.
Die besondere Höhenlage H des Hauptrahmens 1 ermöglicht dabei zudem einen ungehinderten Durchgang
der Schlepperzapfwelle 38 zum Hauptgetriebe 39
der Rotoregge 31.

In Fig. 10 ist schließlich unter dem gleichen Erfindungsgedanken noch dargestellt, daß die bei
Zwangsantrieb Zugkraft einsparende Andrückwalze
auch mit einem direkt vom Hauptgetriebe 39 der
Rotoregge 31 abgeleiteten Antrieb 40 versehen
werden kann.
Zudem wird gegenüber den Darstellungen in Fig. 7
bis 9 eine erheblich kürzere Baulänge der gesamten
maschinellen Einheit erreicht, wenn gemäß Fig. 10
und 11 der Rahmen 34 der Rotoregge unmittelbar an
dem Joch 9 der Andrückwalze 7 angeschlossen ist.

- 9 -

Eine starre, lediglich in der Vertikalen verstellbare Halterung 42 für die Andrückwalze 7 hat zudem den Vorteil, daß diese Walze 7 auch zusätzlich eine Abstützfunktion und damit eine exakte Tiefenregelung für die Rotoregge 31 auch auf dem von tiefgehenden Lockerungsscharen des Schichtengrubbers erheblich und zuweilen auch ungleichmäßig angehobenen Boden übernehmen kann. Das ermöglicht erstmals die sehr flache Krümelung der obersten Bodenschicht bzw. die Zerkleinerung der darauf wachsenden Pflanzen, unabhängig davon, wie tief die Lockerungsschare 6 eingestellt sind, und damit die Vermeidung jeder Beeinträchtigung des Bodenlebens und die Verminderung von Wasserverlusten.

Eine sehr kurze Baulänge wird zudem noch erreicht, wenn gemäß Fig. 11 die Andrückwalze 7 aus mit Abstand nebeneinander aufgereihten Scheiben gebildet und die Rotoregge so eng angeschlossen wird, daß deren Zinken in die Walzenscheibenzwischenräume eingreifen. Das verbessert auch die Zerkleinerung und Einmischung von Ernterückständen.

Eine in den Zeichnungen nicht dargestellte Sonderbauart der Andrückwalze 7 vermeidet schließlich das

0070396

Ansammeln von auf der Erdoberfläche liegendem langhalmigem Getreide- oder Körnermaisstroh u. dgl. vor den Haltestielen der Lockerungsschare dadurch, daß lediglich in jedem zweiten Zwischenraum zwischen zwei benachbarten Haltestielen ein Walzenabschnitt angeordnet ist.

Dadurch wird vermieden, daß ein- und dasselbe Strohbüschel o.ä. gleichzeitig von je einem auf jeder Seite eines Haltestieles angeordneten Walzenabschnitt auf den Erdboden gepreßt wird und daher die Walzen blockieren und Verstopfungen verursachen kann. Jeder zwischen zwei Haltestielen der Lockerungswerkzeuge angeordnete Walzenabschnitt drückt vielmehr auch das von ihm erfaßte, zum Teil vor dem benachbarten freien Zwischenraum liegende Stroh u.dgl. auf den Erdboden, so daß es verstopfungsfrei eingezogen bzw. nach hinten gefördert wird.

Wenn hierbei aus Scheiben bestehende Walzenabschnitte verwendet werden, dann können die Zinken der Rotoregge durch die Zwischenräume zwischen diesen Scheiben greifen und eine besonders gute Zerkleinerung und Einmischung der Ernterückstände erzielen. Dabei kann es zweckmäßig sein, Scheiben mit gezackten Rändern zu verwenden, die das Stroh besser festhalten.

— 1 —

Patentansprüche

1. Schichtengrubber zur Tiefenlockerung verfestigter Ackerböden, Grünflächen o.dgl., bestehend aus einem quer zur Arbeitsrichtung verlaufenden Rahmenrohr mit vorn liegendem Dreipunktanschluß sowie am Rahmen fest oder höhenverstellbar gelagerten Haltestielen für die schar- bzw. flügelförmigen Lockerungskörper, gekennzeichnet durch eine zusätzlich am Geräterahmen (1) angelenkte, sich über die gesamte Arbeitsbreite der Lockerungsschare (6) erstreckende, frei drehbare und zumindest mit einem Teil ihres Umfangs in vertikaler Projektion oberhalb der Lockerungskörper (6) verlaufenden Andrückwalze (7).

2. Schichtengrubber nach Anspruch 1, dadurch gekennzeichnet, daß die Andrückwalze (7) aus einzelnen, über eine gemeinsame Achse (8) miteinander verbundenen und mit gegenseitigem Axialabstand (a) zueinander liegenden Teilabschnitten (7a bis 7f) besteht und letztere von der Geräterückseite (1') her in die jeweiligen Zwischenräume (b und c) zwischen den Haltestielen (5) und/oder die unteren Dreipunktkonsolen (3) hineinragen.

3. Schichtengrubber nach den Ansprüchen 1 und 2,
dadurch gekennzeichnet,
daß die Andrückwalze (7) in Bezug auf die Lockerungskörper (6) höhen-, und in Bezug auf deren Haltestiele
(5) zudem in ihrem wirksamen Nachlaufabstand (e)
horizontal verstellbar am Geräterahmen (1) gelagert
ist.

4. Schichtengrubber nach mindestens einem der vorhergehenden Ansprüche,
dadurch gekennzeichnet,
daß die Längsachse (8) der Andrückwalze (7) in einem
bügelförmigen Joch (9) gehalten und dieses über in
ihrer Längenausdehnung veränderbare Hebel (10) einerseits schwenkbar an den unteren Dreipunktkonsolen (3)
angelenkt und zum anderen über weitestgehend vertikal
gerichtete Stellspindeln (12) höhenverstellbar am
Geräterahmen (1) gehalten ist.

5. Schichtengrubber nach mindestens einem der vorhergehenden Ansprüche,
dadurch gekennzeichnet,

- 3 -

daß der Außenmantel der einzelnen Walzenabschnitte
(7a bis 7f) eine geschlossene (7'), glatte bzw.
profilierte oder aus einzelnen Horizontalstäben (7'')
bestehende, käfigartige offene Oberfläche aufweist.

6. Schichtengrubber nach einem oder mehreren der vorhergehenden Ansprüchen,
dadurch gekennzeichnet,
daß sich die am Rahmenrohr (1) vorzugsweise fest angeschlossenen Halterungen (4) für die Haltestiele (5)
der Lockerungskörper (6) als Vertikalkonsolen in
Richtung auf den Erdboden (E) hin im Bereich der
Zwischenräume (a) zwischen den einzelnen Walzenabschnitten (7a bis 7f) abwärts erstrecken.

7. Schichtengrubber nach Anspruch 6,
dadurch gekennzeichnet,
daß die Stiele (5') der Lockerungskörper (6') in vertikaler Projektion unmittelbar unterhalb des Rahmenrohres
(1) liegen (Fig. 3).

8. Schichtengrubber nach mindestens einem der vorhergehenden Ansprüche,
dadurch gekennzeichnet,

daß die Walzenabschnitte (7a bis 7f) jeweils einzeln oder zu Gruppen (7a bis 7c und 7d bis 7f) an gemeinsamen Achsabschnitten (8a und 8b) zusammengefaßt über entsprechende Bügelteile (9a und 9b) verstellbar am Geräterahmen (1) gelagert sind.

9. Schichtengrubber mit Andrückwalze nach mindestens einem der vorhergehenden Ansprüche,
gekennzeichnet durch
Zuordnung eines Zwangsantriebs (27) zur Andrückwalze (7a bis 7f) in Form eines vorzugsweise vor den Lockerungskörpern (6) und seitlich zum Schlepper laufenden Bodenantriebsrades (19).

10. Schichtengrubber mit Andrückwalze nach mindestens einem der Ansprüche 1 bis 8,
gekennzeichnet durch
Zuordnung eines von der Schlepperzapfwelle über ein gesondertes Getriebe (28) abgeleiteten Zwangsantriebs (27) für die Andrückwalze (7a bis 7f).

11. Schichtengrubber mit Andrückwalze nach einem oder mehreren der vorhergehenden Ansprüche,

dadurch gekennzeichnet,

daß dem Grundgerät (1 bis 9) eine an sich bekannte Rotoregge (31) nachgeordnet ist.

12. Schichtengrubber nach Anspruch 11,

dadurch gekennzeichnet,

daß die Rotoregge (31) mit ihrem Anbaurahmen (34) am Gestell (36) der Andrückwalze (7a bis 7f) über Arme (35) o. dgl. verstellbar angeordnet ist.

13. Schichtengrubber nach Anspruch 11,

dadurch gekennzeichnet,

daß die Rotoregge über eine Zwischenbrücke (37) am Rahmen (1) des Grundgerätes (1 bis 9) angelenkt ist.

14. Schichtengrubber nach einem oder mehreren der vorhergehenden Ansprüche,

dadurch gekennzeichnet,

daß die Drehachse (8) der Andrückwalze (7a bis 7f) um ein bestimmtes Maß (e') vor den Stielen (5) der Lockerungsschare (6) liegt.

15. Schichtengrubber mit Andrückwalze nach einem oder mehreren der vorherigen Ansprüche, dadurch gekennzeichnet, daß der Andrückwalze (7a - 7f) ein vom Hauptgetriebe (39) der Rotoregge (31) unmittelbar abgeleiteter Zwangsantrieb (40) zugeordnet ist (Fig. 10).

16. Schichtengrubber mit Andrückwalze nach einem oder mehreren der vorherigen Ansprüche, dadurch gekennzeichnet, daß die Andrückwalze (7) aus mit Abstand nebeneinander auf einer Achse aufgereihten einzelnen Scheiben besteht und die Zinken der Rotoregge (31) in die Zwischenräume der Scheiben (7) eingreifen.

17. Schichtengrubber mit Andrückwalze nach einem oder mehreren der vorherigen Ansprüche, dadurch gekennzeichnet, daß der Rahmen (34) der Rotoregge (31) unmittelbar an das Joch (9) der Andrückwalze (7) angehängt ist (Fig. 10).

18. Schichtengrubber mit Andrückwalze nach einem oder mehreren der vorherigen Ansprüche,

dadurch gekennzeichnet,

daß die Andrückwalze (7) über eine Vertikalführung (41) höhenverstellbar an den Hebelarmen (10) gelagert ist (Fig. 11).

19. Schichtengrubber mit Andrückwalze nach einem oder mehreren der vorhergehenden Ansprüche,

dadurch gekennzeichnet,

daß die Andrückwalze (7) höhenverstellbar und lösbar vor dem Rahmen der Rotoregge angeordnet ist.

20. Schichtengrubber mit Andrückwalze nach einem oder mehreren der vorhergehenden Ansprüche,

dadurch gekennzeichnet,

daß einzelne Abschnitte der Andrückwalze (7) lediglich in jedem zweiten Zwischenraum zwischen den in Abständen nebeneinander angeordneten Haltestielen der Lockerungswerkzeuge angeordnet sind.

0070396

Fig.1

Fig.3

0070396

Fig. 2

Fig. 4

Fig. 5

Fig. 6

Fig. 7

Fig. 8

Fig. 9

Fig. 10

Fig. 11

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | FR-A-2 158 574   (STEKETEE)<br>* Insgesamt * | 1,3,5 | A 01 B   35/18<br>A 01 B   49/02<br>A 01 B   13/08 |
| | --- | | |
| A | GB-A-2 063 632   (IMPERIAL CHEMICAL INDUSTRIES LTD.)<br>* Seite 4, Zeilen 55-84; Figuren 1,13,14 * | 1,5,10 | |
| | --- | | |
| A | DE-A-2 821 863   (WEICHEL) | | |
| | --- | | |
| A | DE-A-2 839 207   (WEICHEL) | | |
| | --- | | |
| A | DE-A-2 943 732   (WEICHEL) | | RECHERCHIERTE SACHGEBIETE (Int. Cl. 3) |
| | --- | | |
| A | NL-A-  295 205   (VAN DER LELY) | | |
| | --- | | A 01 B |
| A | US-A-1 702 196   (COLE) | | |
| | --- | | |
| A | GB-A-  949 098   (KORTLANG) | | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 27-09-1982 | VERDOODT S.J.M. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
 
& : Mitglied der gleichen Patentfamilie, übereinstimmendes Dokument

EPA Form 1503. 03.82